# EUROPEAN PATENT SPECIFICATION

(11) **EP 1 129 933 B1**
(45) Date of publication and mention of the grant of the patent: **28.12.2005**
(21) Application number: 01103472.5
(22) Date of filing: 14.02.2001
(51) Int. Cl.: B62M 23/02

(54) **Motor-driven bicycle**
Antriebseinheit für Fahrräder
Bicyclette à moteur

(30) Priority: 01.03.2000 JP 2000055084
(43) Date of publication of application: 05.09.2001
(73) Proprietor: HONDA GIKEN KOGYO KABUSHIKI KAISHA, Minato-ku, Tokyo (JP)
(72) Inventor: Sakagami, Koji,c/o K.K. Honda Gijutsu Kenkyusho, Wako-shi, Saitama (JP); Iwadate, Toru,c/o K.K. Honda Gijutsu Kenkyusho, Wako-shi, Saitama (JP)
(74) Representative: Liska, Horst

(56) References cited:
- US-A- 3 921 745
- PATENT ABSTRACTS OF JAPAN vol. 2000, no. 03, 30 March 2000 (2000-03-30) & JP 11 348868 A (YAMAHA MOTOR CO LTD), 21 December 1999 (1999-12-21)
- PATENT ABSTRACTS OF JAPAN vol. 2000, no. 05, 14 September 2000 (2000-09-14) & JP 2000 038187 A (BRIDGESTONE CYCLE CO), 8 February 2000 (2000-02-08)
- PATENT ABSTRACTS OF JAPAN vol. 1999, no. 11, 30 September 1999 (1999-09-30) & JP 11 147495 A (HONDA MOTOR CO LTD), 2 June 1999 (1999-06-02)
- PATENT ABSTRACTS OF JAPAN vol. 1997, no. 09, 30 September 1997 (1997-09-30) & JP 09 123978 A (BRIDGESTONE CYCLE CO), 13 May 1997 (1997-05-13)

## Description

The present invention relates to a method of controlling the shifting of adjacent gear steps in a motor-driven bicycle including a drive motor for generating a self-running power in response to an operation amount of a self-running means operated by a driver and an automatic gear shifter, capable of obtaining a desirable gear-shift feeling upon automatic gear-shift.

Unlike a motor-assisted bicycle, called an assist bicycle, including an electric motor for generating an assisting power in response to a leg-power inputted to a crank shaft, wherein a synthetic power of the leg-power and assisting power is transmitted to a drive wheel, a motor-driven bicycle including a drive motor for generating a self-running power in response to, typically, an opening degree of a throttle lever has been proposed, for example, in Japanese Patent Laid-open No. Hei 9-263289.

A motor-driven bicycle, including a stepping gear shifter different from a continuous variable transmission mounted on a conventional motor-driven scooter or the like and an actuator of the stepping gear shifter, has a technical problem that if a difference occurs between output torques at adjacent two of gear steps before and after gear shift, a desirable gear shift feeling cannot be obtained.

JP 11 34 88 68 discloses a power-assisted bicycle with an automatic transmission using a method of controlling the shifting of adjacent gear steps according to the preamble of claim 1. When the speed is increasing, an acceleration map in a map is selected. When the speed is not increasing, a deceleration map is selected. The speed shift position is obtained from the present vehicle speed data based on the selected map, and whether the vehicle speed is a shift implementation speed or not is judged. When the vehicle speed is the shift implementation speed, an actuator is driven to shift a shift mechanism.

An object of the present invention is to solve the above-described problem of the prior art motor-driven bicycle, and to provide a method for controlling the shifting of adjacent gear steps in a motor-driven bicycle capable of obtaining a desirable gear shift feeling upon automatic gear shift.

To achieve the above object, according to the present invention, there is provided a method of controlling the shifting of adjacent gear steps in a motor-driven bicycle in accordance with claim 1.

The motor-driven bicycle includes a drive motor for generating a self-running power in response to an operated amount of a self-running operation by a driver, and a gear shifter connected between the drive motor and a drive wheel.

The gear shifter actuator switches adjacent two of gear steps of the gear shifter at a predetermined gear shift vehicle speed, wherein the gear shift vehicle speed is set to a speed at which vehicle speed-torque curves of the adjacent two of gear steps intersect each other.

With the above configuration, since the output torques at adjacent two of gear steps before and after substantially correspond to each other at a gear-shift vehicle speed, it is possible to obtain a desirable gear-shift feeling without any gear-shift shock.

The present invention exhibits the following effect: Since a gear-shift vehicle speed is set to a speed at which output torque curves of adjacent two of gear steps intersect each other output torques of the adjacent two of gear steps before and after gear-shift are made to correspond to each other, with a result that it is possible to obtain a desirable shift feeling without gear-shift shock.

If an output of the drive motor is corrected such that output torque curves of adjacent two of gear steps before and after gear-shift substantially correspond to each other at a gear-shift vehicle speed, it is possible to obtain a desirable shift feeling without gear-shift shock.

If a drive force of the drive motor is reduced such that an output torque at one of adjacent two of gear steps after gear-shift is lowered, at a gear-shift vehicle speed, to an output torque of the other of the adjacent two of gear steps before gear-shift, it is possible to obtain a desirable shift feeling without gear-shift shock.

If a drive force of the drive motor is gradually reduced such that an output torque at one of adjacent two of gear steps before gear-shift is lowered to an output torque at the other of adjacent two of gear steps after gear-shift, it is possible to obtain a desirable shift feeling without gear-shift shock even when the output torque is lowered by gear-shift.

If a duty ratio map in which a duty ratio of a drive current supplied to the drive motor is matched to an operated amount of self-running is provided and a duty ratio obtained from the duty ratio map is controlled for controlling a drive force of the drive motor, it is possible to eliminate the need of additionally providing a map for torque control.

Hereinafter, the present invention will be described in detail with reference to the accompanying drawings.
- Fig. 1: is a view showing a configuration of a motor-driven bicycle to which the present invention is applied.
- Fig. 2: is a block diagram of a controller shown in FIG. 1.
- Fig. 3: is a flow chart showing an operation of the controller.
- Fig. 4: is a flow chart showing a rapid acceleration suppressing control.
- Fig. 5: is a flow chart showing a gear shift control.
- Fig. 6: is a flow chart showing a motor output limiting control.
- Fig. 7: is a view showing a gear shift control method upon shift-up from the "second speed" to the "third speed", not covered by the present invention.
- Fig. 8: is a view showing a gear shift control method upon shift-down from the "second speed" to the "first speed", not covered by the present invention.
- Fig. 9: is a view showing a gear-shift control method upon shift-up from the "first speed" to the "second speed", not covered by the present invention.
- Fig. 10: is a view showing a method of setting a gear shift vehicle speed Vch23 between the "second speed" and the "third speed" in accordance with the present invention.
- Fig. 11: is a view showing a method of setting a gear shift vehicle speed Vch12 between the "first speed" and the "second speed" in accordance with the present invention.

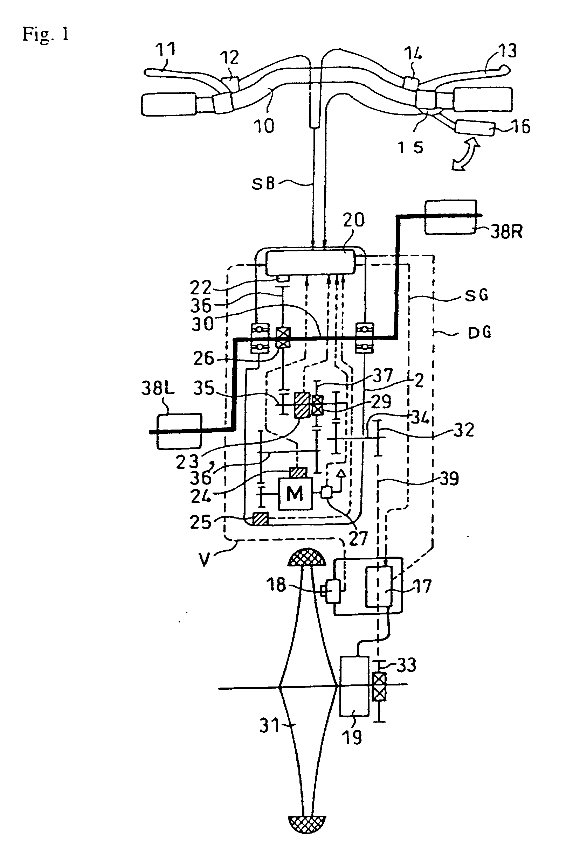

FIG. 1 is a view showing a configuration of a motor-driven bicycle to which the present invention is applied. In this figure, parts not necessary for description of the present invention are omitted.

Like a conventional bicycle, a handlebar 10 includes at its left end portion a brake lever 11 for a rear wheel and at its right end portion a brake lever 13 for a front wheel. The handlebar 10 also includes in the vicinities of fulcrums of the brake levers 11 and 13 brake switches 12 and 14 for detecting operational states of the brake levers 11 and 13 and outputting during-braking signals SB. The handlebar 10 further includes at its right end portion a throttle lever 16 as self-running input means for indicating generation of a self-running power to a drive motor M (which will be described later), and a throttle opening sensor 15 for detecting an operated angle θth as an operated amount.

A body frame has at its central portion a power unit 2 for selectively carrying out "self-running" by the drive motor M and "assist-running" for assisting a leg power by a drive force of the drive motor M. A leg-power inputted to a crank shaft 30 from left and right crank pedals 38L and 38R is transmitted via a one-way clutch 26 to a large-diameter gear 36 coaxially connected to the crank shaft 30, and is further transmitted via a first idle shaft 35 to an output shaft 34.

A drive force generated by the drive motor M is transmitted via a second idle shaft 36' to an idle gear 37. The idle gear 37 is connected via a one-way clutch 29 to the first idle shaft 35. The drive force having been transmitted to the idle gear 37 is transmitted via the first idle shaft 35 to the output shaft 34. One end of the output shaft 34 is exposed to the outside of the power unit 2, and a drive sprocket 32 is connected to the exposed end of the output shaft 34.

A motor rotational speed sensor 25 detects a rotational speed NM of the drive motor M. A temperature sensor 24 detects a temperature TM of the drive motor M. A leg-power sensor 23 detects a leg-power inputted to the crank shaft 30. A crank rotation sensor 22 detects a rotational speed NC of the crank shaft 30. A current sensor 27 detects a drive current IM of the drive motor M. Output signals of the above-described sensors are inputted to a controller 20.

A driven sprocket 33 and a four-step gear shifter 19 are provided on an axle of a rear wheel 31 as a drive wheel. The drive sprocket 32 of the output shaft 34 is connected to the driven sprocket 33 via a chain 39. An automatic gear-shift actuator 17 outputs a gear-shift step signal DG representative of a gear-shift step in response to a gear-shift command SG outputted from the controller 20. The gear shifter 19 is driven on the basis of the gear-shift step signal DG. A rotational speed V of the rear wheel 31 is detected by a vehicle speed sensor 18, and a signal of the vehicle speed sensor 18 is inputted to the controller 20.

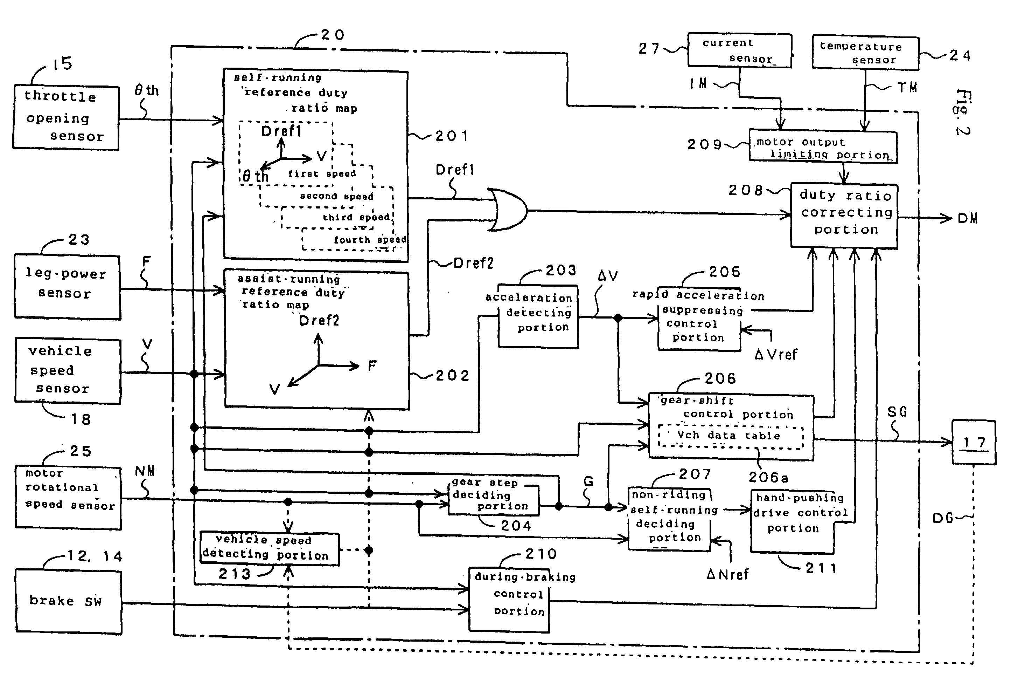

FIG. 2 is a block diagram showing a configuration of a main portion of the controller 20. In this figure, the same characters as those shown in FIG. 1 designate the same or similar parts.

In a self-running reference duty ratio map 201, a reference duty ratio Drefl of a drive current IM to be supplied to the drive motor M upon self-running is previously registered as a function of the throttle opening angle *θ* th detected by the throttle opening sensor 15, the vehicle speed V, and a gear step G. In an assist-running reference duty ratio map 202, a reference duty ratio Dref2 of the drive current IM to be supplied to the drive motor M upon assist-running is previously registered as a function of the leg-power F detected by the leg-power sensor 23 and the vehicle speed V detected by the vehicle speed sensor 18.

It should be noted that in place of detection of the vehicle speed V by the vehicle speed sensor 18, the vehicle speed V may be detected, by a vehicle speed detecting portion 213 additionally provided, on the basis of the gear-shift step signal DG, which is representative of the gear-shift step G and which is outputted from the automatic gear-shift actuator 17, and the motor rotational speed NM detected by the motor rotational speed sensor 25.

An acceleration detecting portion 203 detects an acceleration ΔV on the basis of a rate of change in vehicle speed V with elapsed time. A gear step deciding portion 204 decides the present gear step G on the basis of the detected vehicle speed V and motor rotational speed NM. A rapid acceleration suppressing control portion 205 compares the detected acceleration ΔV with a reference acceleration ΔVref, and instructs, if the detected acceleration ΔV is more than the reference acceleration ΔVref, a duty ratio correcting portion 208 (which will be described later) to correct a duty ratio so as to suppress rapid acceleration.

Referring to a gear shifting vehicle speed (Vch) data table 206a, a gear-shift control portion 206 decides, on the basis of the detected acceleration ΔV and vehicle speed V and the present gear step G decided by the gear step deciding portion 204, whether or not the present running state is a gear-shift timing state. The decided result is supplied to the duty ratio correcting portion 208 and is also outputted to the gear-shift actuator 17.

A non-riding self-running deciding portion 207 decides, on the basis of the present gear step G and motor rotational speed NM, whether or not the present self-running operation is performed in the driver's non-riding state. If it is decided that the self-running operation is performed in the driver's non-riding state, a hand-pushing drive control portion 211 instructs the duty ratio correcting portion 208 to correct a duty ratio so as to generate a self-running power corresponding to a walking speed.

A during-braking control portion 210 instructs the duty ratio correcting portion 208 to correct a duty ratio so as to control a self-running power on the basis of the presence or absence of a braking operation and the vehicle speed V. To be more specific, if the on-states of the brake switches 12 and 14 are detected during running of the vehicle, the during-braking control portion 210 instructs the duty ratio correcting portion 208 to correct a duty ratio so as to allow the drive motor M to generate a drive force being small enough to bring about a state in which no load is apparently applied to the drive motor M. Meanwhile, if a self-running operation is performed in a vehicle stoppage state in which the brake switches 12 and 14 are in the on-states, the during-braking control portion 210 instructs the duty ratio correcting portion 208 to correct a duty ratio so as to allow the drive motor M to generate a drive force corresponding to an operated amount of the self-running operation.

A motor output limiting portion 209 monitors an operational state of the drive motor M on the basis of the drive current IM of the drive motor M detected by the current sensor 27 and the temperature TM of the drive motor M detected by the temperature sensor 24, and instructs, if the drive motor M is in a severe operational state, the duty ratio correcting portion 208 to correct a duty ratio so as to limit the self-running power.

The duty ratio correcting portion 208 corrects, as will be described in detail later, the reference duty ratio Drefl or Dref2 obtained from the duty ratio map 201 or 202 on the basis of the instructions supplied from the rapid acceleration suppressing control portion 205, the gear-shift control portion 206, the hand-pushing control portion 211, the during-braking control portion 210, and the motor output limiting portion 209, and outputs the corrected result as a target duty ratio DM.

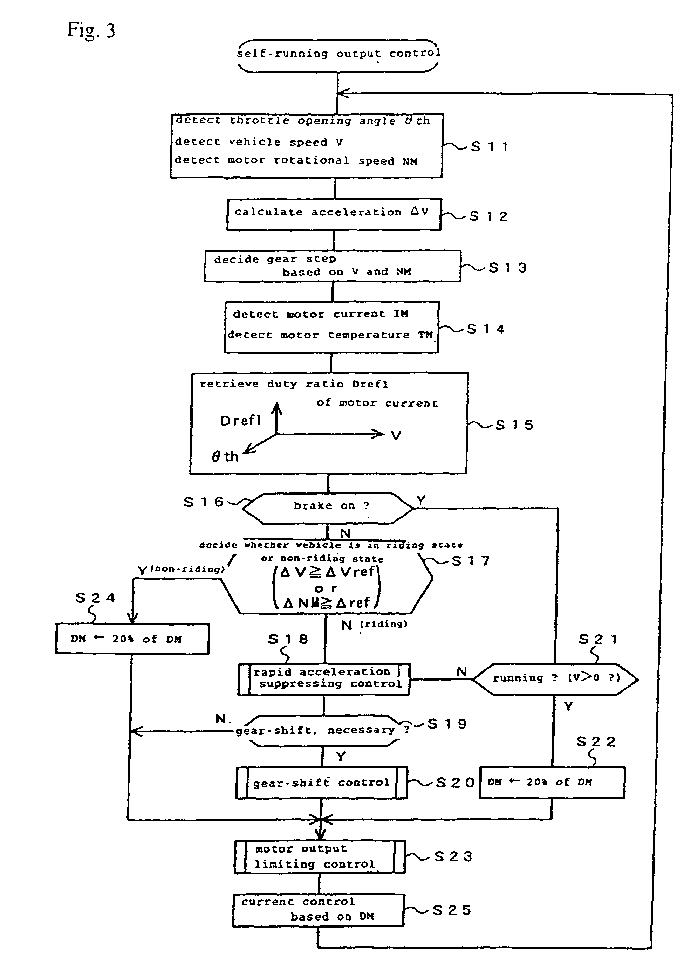

A method of controlling the drive motor M upon self-running by the controller 20 will be described with reference to a flow chart shown in FIG. 3.

In step S11, an opening angle θ th of the throttle lever 16 is detected by the throttle opening sensor 15; a vehicle speed V is detected by a vehicle speed sensor 18; and a rotational speed NM of the drive motor M is detected by the motor rotational speed sensor 25. In step S12, an acceleration ΔV is calculated on the basis of the vehicle speed V detected in step S11 by the acceleration detecting portion 203. In step S13, the present gear step G is decided on the basis of a correlation between the vehicle speed V and the motor rotational speed NM by the gear step deciding portion 204. It should be noted that the present gear step G may be decided on the basis of the gear-shift step signal DG outputted from the automatic gear-shift actuator 17.

In step S14, a drive current IM of the drive motor M is detected by the current sensor 27, and a temperature TM of the drive motor M is detected by the temperature sensor 24. In step S15, a reference duty ratio Drefl upon self-running is retrieved from the duty ratio map 201 for self-running on the basis of the throttle opening angle θ th and vehicle speed V detected in step S11 and the present gear step G decided in step S13.

In step S16, on the basis of the states of the brake switches 12 and 14, it is decided by the during-braking control portion 210 whether or not a braking operation has been performed. If it is decided that the braking operation has not been performed, the process goes on to step S17. In step S17, on the basis of an increase ratio ΔNM of the motor rotational speed NM, it is decided by the non-riding self-running deciding portion 207 whether or not the driver has operated the throttle lever 16 in the driver's non-riding state. If the increase ratio ΔNM of the motor rotational speed NM is a reference increase ratio ΔNref or more, it is decided that the driver has operated the throttle lever 16 in the driver's non-riding state, and the process goes on to step S24. If the increase ratio ΔNM is less than the reference increase ratio ΔNref, it is decided that the driver has operated the throttle lever 16 in the driver's riding state, and the process goes on to step S18.

The parameter for deciding whether or not the driver has operated the throttle lever 16 in the driver's non-riding state is not limited to the above-described increase ratio ΔNM of the motor rotational speed NM. For example, the acceleration ΔV may be used as the decision parameter. In this case, if the acceleration ΔV is larger than a reference acceleration, it may be decided that the driver has operated the throttle lever 16 in the driver's non-riding state. Alternatively, a change ratio of the drive current of the drive motor M may be used as the decision parameter. In this case, if the change ratio of current is larger than a reference change ratio of current, it may be decided that the driver has operated the throttle lever 16 in the driver's non-riding state.

In this way, according to this embodiment, it is decided, on the basis of the increase ratio of the motor rotational speed, acceleration of the vehicle, or the change ratio of a drive current of the drive motor, whether or not the self-running operation is performed in the driver's non-riding state, and accordingly, it is possible to eliminate the need of providing a sensor or a switch for detecting the driver's non-riding state.

In step S18, a routine of "rapid acceleration suppressing control" for ensuring a sufficient acceleration performance while suppressing rapid acceleration is executed.

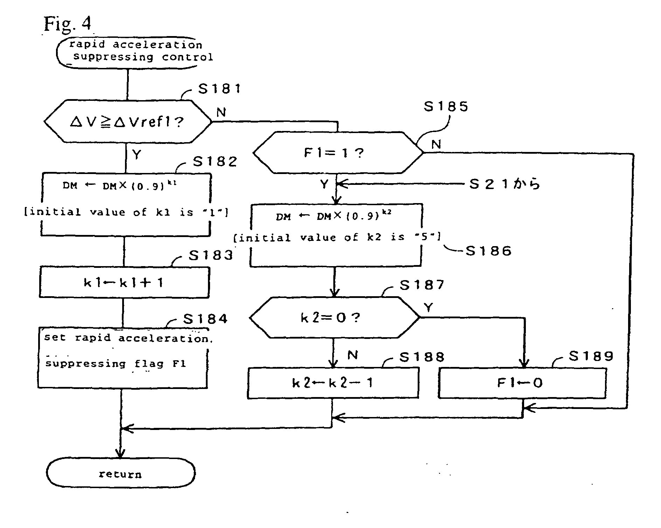

FIG. 4 is a flow chart indicating a control content of the "rapid acceleration suppressing control". The control content is determined such that an acceleration corresponding to an operated amount of the throttle lever 16 can be obtained irrespective of a road surface state, a deadweight, and the like by controlling a self-running power of the drive motor M on the basis of a correlation between an operated amount of the throttle lever 16 and an acceleration.

In step S181, the present acceleration ΔV is compared with a reference acceleration ΔVref by the rapid acceleration suppressing control portion 205. If the acceleration ΔV is more than the reference acceleration ΔVref, it is decided that the vehicle is in the rapid acceleration state, and the process goes on to step S182. In step S182, the reference duty ratio Drefl retrieved from the duty ratio map 201 upon self-running is multiplied by a correction coefficient smaller than "1" by the duty ratio correcting portion 208, and the calculated result is taken as a target duty ratio DM.

In this embodiment, the correction coefficient is defined as "0.9^{k1}", and the initial value of the exponent k1 is set to "1". Accordingly, in the initial state, a value being 0.9 times the reference duty ratio Drefl decided by the map 201 is registered as the target duty ratio DM. In step S183, the value of the exponent k1 is incremented by "1". In step S184, a rapid acceleration suppressing flag F1 is set to "1".

After that, since the above steps are repeated to increase the value of the exponent k1 until it is decided in step S181 that the acceleration ΔV is less than the reference acceleration ΔVref, the target duty ratio DM is gradually reduced depending on the value of the exponent k1.

If it is decided in step S181, as a result of gradually reducing the target duty ratio DM, that the acceleration ΔV is less than the reference acceleration ΔVref, the process goes on to step S185 in which it is decided that the rapid acceleration suppressing flag F1 is "1". If it is decided that the flag F1 is set to "1", the process goes on to step S186 in which the duty ratio having been gradually reduced in step S182 is gradually increased.

In step S186, the present target duty ratio DM is multiplied by a correction coefficient smaller than "1", and the calculated result is taken as a new target duty ratio DM. In this embodiment, the correction coefficient is defined as a value of "0.9^{k2}", and the initial value of the exponent k2 is set to "5". In the initial state, a value being 0.59 (= 0.9⁵) times the target duty ratio DM is taken as a target duty ratio DM.

In step S187, it is decided whether or not the exponent k2 is reduced to "0". Since the exponent k2 is "5" in the initial state, the process goes on to step S188. In step S188, the value of the exponent k2 is decremented by "1". If it is decided in step S187 that the exponent k2 is "0", the process goes on to step S189 in which the rapid acceleration suppressing flag F1 is reset, thereby ending the routine of "rapid acceleration suppressing control" shown in FIG. 4.

In this way, according to this embodiment, if the acceleration ΔV is more than the reference acceleration ΔVref, the correction coefficient is, in step S182, gradually reduced for gradually reducing the target duty ratio DM, and thereafter, if the acceleration ΔV is less than the reference acceleration ΔVref, the correction coefficient is, in step S186, gradually increased for gradually increasing the target duty ratio DM, thereby compensating for the above-described gradually reduced amount of the target duty ratio DM. Accordingly, it is possible to obtain a sufficient acceleration performance while suppressing rapid acceleration.

Referring again to FIG. 3, in step S19, it is decided by the gear-shift control portion 206 whether or not automatic gear-shift should be performed. If an absolute value of a difference between the present vehicle speed V and a gear-shift vehicle speed Vch stored in the gear-shift vehicle speed data table 206a for each gear step is less than a reference speed VA, the process goes on to step S20 in which a "gear-shift control" is executed for automatic gear-shift. As the gear-shift vehicle speed Vch, a gear-shift vehicle speed Vch12 indicating a gear-shift timing between "first speed"/"second speed", a gear-shift vehicle speed Vch23 indicating a gear-shift timing between "second speed"/"third speed", and a gear-shift vehicle speed Vch34 indicating a gear-shift timing between "third speed"/"fourth speed" are registered. Either of the gear-shift vehicle speeds Vch12, Vch23, and Vch34 is selected on the basis of the present gear step G.

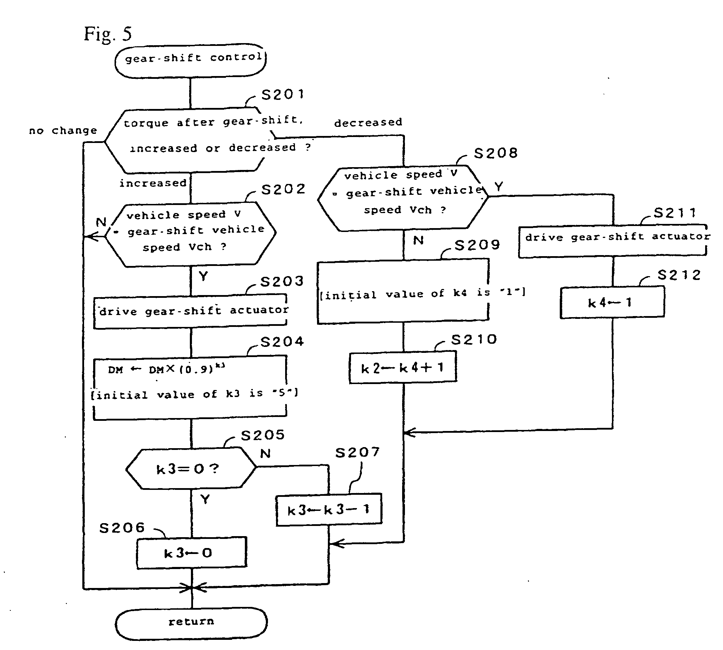

FIG. 5 is a flow chart indicating the routine of the "gear-shift control", which mainly shows the operation of the gear-shift control portion 206.

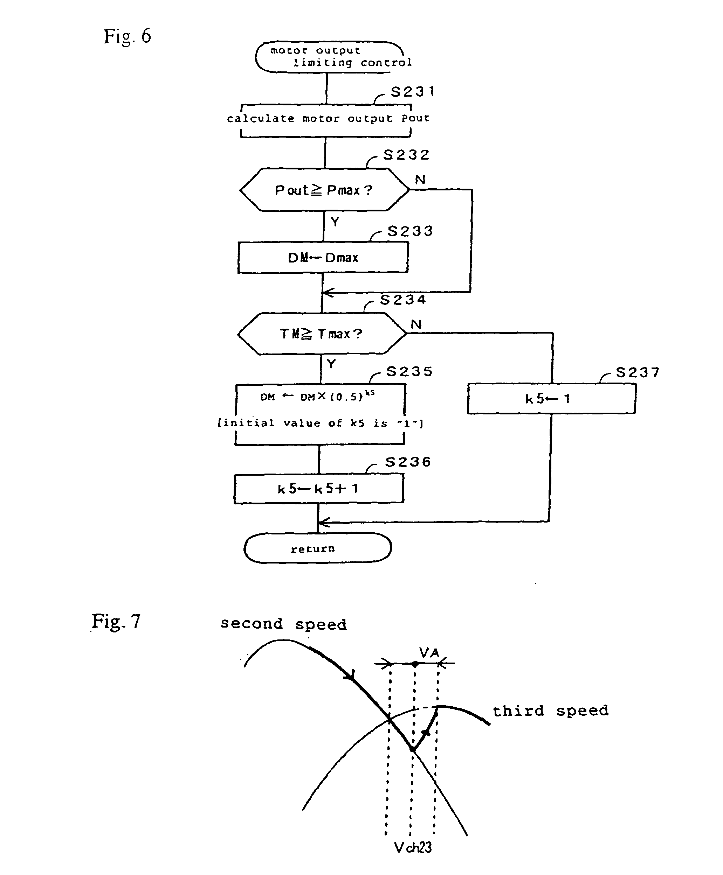

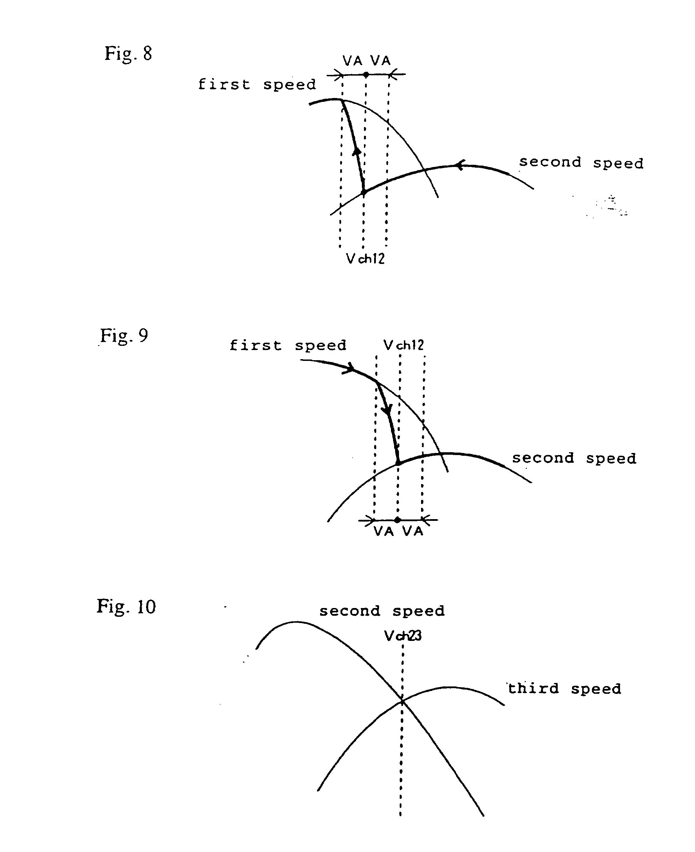

In step S201, it is decided whether or not a variation in torque caused by gear-shift is increased or decreased. For example, upon shift-up from the "second speed" to the "third speed", as shown in FIG. 7, a torque at the "third speed" is larger than that of the "second speed" at the gear-shift vehicle speed Vch23, and accordingly, it is decided in step S201 that the torque is increased after gear-shift, and the process goes on to step S202. Similarly, upon shift-down from the "second speed" to the "first speed", as shown in FIG. 8, a torque at the "first speed" is larger than that of the "second speed" at the gear-shift vehicle speed Vchl2, and accordingly, it is decided in step S201 that the torque is increased after gear-shift, and the process goes on to step S202.

In step S202, referring to the gear-shift vehicle speed data table 206a, the gear-shift control portion 206 decides whether or not the present vehicle speed V reaches a predetermined gear-shift vehicle speed Vch corresponding to the present gear step. Here, if it is decided that, as shown in FIG. 7, the vehicle speed V reaches the gear-shift vehicle speed Vch23 during running at the "second speed" and thereby the timing of shift-up to the "third speed" comes, the process goes on to step S203 in which the gear-shift actuator 17 is driven for gear-shift (shift-up). In step S204, the present target duty ratio DM is multiplied by a correction coefficient smaller than "1", and the calculated result is taken as a new target duty ratio DM.

According to this embodiment, the correction coefficient is defined as "0.9^{k3}", and the initial value of the exponent k3 is set to "5". Accordingly, in the initial state, a value being 0.59 times (= 0.9⁵) the present target duty ratio DM is taken as a target duty ratio DM. As a result, as shown in FIG. 7, a torque immediately after shift-up to the "third speed" is lowered to the same level as that of a torque at the "second speed", with a result that it is possible to obtain a desirable shift feeling.

In step S205, it is decided whether or not the exponent k3 is "0". Since the exponent k3 is "5" in the initial state, the process goes on to step S207 in which the exponent k3 is decremented by "1".

After that, the above-described steps are repeated, to gradually reduce the value of exponent k3, thereby gradually reducing the target duty ratio DM. Accordingly, as shown in FIG. 7, a self-running power of the drive motor M is rapidly reduced at the gear-shift vehicle speed Vch23, and then gradually increased to be returned to the original target duty ratio DM, thereby obtaining a proper torque corresponding to the gear step.

Similarly, as shown in FIG. 8, even in the case where the vehicle speed V is lowered to the gear-shift vehicle speed Vch12 during running at the "second speed" to be thus shifted down to the "first speed", the target duty ratio DM is reduced such that a torque immediately after shift-down to the "first speed" is reduced to the same level as that of a torque at the "second speed", and then the target duty ratio DM is gradually increased to be returned to the original target duty ratio DM, thereby obtaining a desirable shift feeling.

On the other hand, upon shift-up from the "first speed" to the "second speed", as shown in FIG. 9, since a torque at the "second speed" is smaller than a torque at the "first speed" at the gear-shift vehicle speed Vchl2, it is decided in step S201 that the torque is reduced after gear-shift, and the process goes on to step S208 in which it is decided whether or not the present vehicle speed V reaches a predetermined gear-shift vehicle speed Vch12. If it is decided that the vehicle speed does not reach the gear-shift vehicle speed Vchl2, the process goes on to step S209 in which the present target duty ratio DM is multiplied by a correction coefficient smaller than "1" and the calculated result is taken as a new target duty ratio DM.

In this embodiment, the correction coefficient is defined as "0.9^{k4}", and the initial value of the exponent k4 is set to "1". Accordingly, in the initial state, a value being 0.9 times the present target duty ratio DM is taken as a target duty ratio. In step S210, the exponent k4 is incremented by "1".

After that, the above-described steps are repeated until it is decided in step S208 that the vehicle speed V reaches the gear-shift vehicle speed Vchl2, whereby the target duty ratio DM is gradually reduced according to the value of the exponent k4. Accordingly, as shown in FIG. 9, the torque is gradually reduced.

If it is decided in step S208 that the vehicle speed V reaches the gear-shift vehicle speed Vchl2, the process goes on to step S211 in which the gear-shift actuator is driven for gear-shift. At this time, according to this embodiment, since a torque at the "first speed" is reduced to the same level as that of a torque at the "second speed" as shown in FIG. 9, that is, no difference in output torque lies between before and after gear-shift, it is possible to obtain a desirable shift feeling. In step S212, the exponent k4 is set to "1", thereby completing the routine of the "gear-shift control" shown in FIG. 5.

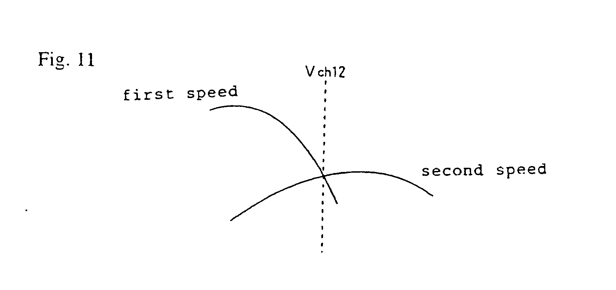

In the above description, to improve the shift feeling upon gear-shift, the duty ratio of a current supplied to the drive motor M is corrected such that torques of adjacent two of gear steps before and after gear-shift are made to substantially correspond to each other, the present invention is not limited thereto. For example, as shown in FIGS. 10 and 11, the gear-shift vehicle speed Vch, typically, Vch12 or Vch23 may be set to a speed at which torque curves of adjacent two of gear steps before and after gear-shift intersect each other, or a neighborhood of the speed. With this configuration, it is also possible to improve the shift feeling upon gear-shift.

Referring again to FIG. 3, in step S23, a routine of "motor output limiting control" for preventing a severe operation of the drive motor is executed. The "motor output limiting control" will be described below with reference to a flow chart shown in FIG. 6.

In step S231, on the basis of a motor drive current IM detected by the current sensor 27 and the present target duty ratio DM, the present output Pout of the drive motor M is calculated. In step S232, the present output Pout of the drive motor M is compared with a specific maximum output Pmax. The maximum output Pmax is preferably set to a value being about two times the maximum rating of the drive motor M and is, in this embodiment, set to a value being 1.5 times the maximum rating.

Here, if it is decided in step S232 that the present output Pout is equal to or more than the maximum output Pmax, the process goes on to step S233 in which the target duty ratio DM is set to a specific maximum value Dmax. In step S234, a temperature TM of the drive motor M detected by the temperature sensor 24 is compared with a reference temperature Tref. In this embodiment, the reference temperature Tref is set to 90°C.

Here, if the temperature TM is the reference temperature Tref or more, the process goes on to step S235 in which the present target duty ratio DM is multiplied by a correction coefficient smaller than "1" and the calculated result is taken as a new target duty ratio DM. In this embodiment, the correction coefficient is defined as "0.5^{k5}", and the initial value of the exponent k5 is set to "1". Accordingly, a value being 0.5 times the present target duty ratio DM is taken as a target duty ratio DM. In step S236, the exponent k5 is incremented by "1".

On the other hand, if it is decided in step S234 that the temperature TM is less than the reference temperature Tref, the process goes on to step S236 in which the exponent k5 is set to the initial value "1".

In this way, according to this embodiment, since the output of the drive motor M is limited and also if the temperature of the drive motor M is increased, the target duty ratio DM is gradually reduced, it is possible to prevent a severe operation of the drive motor M. Also, since the upper limit of the output of the drive motor M lies within a range being two times the rating of the drive motor M, it is possible to obtain a self-running power from the drive motor M without a severe operation of the drive motor M.

Referring again to FIG. 3, in step S25, a control of a current of the drive motor M based on the target duty ratio thus determined is executed.

Additionally, if it is decided in step S16 whether or not either of the brake switches 12 and 14 is in the on-state, that is, the vehicle is on braking, the process goes on to step S21. In step S21, it is decided, on the basis of the vehicle speed V, whether or not the vehicle is on running.

Here, if the vehicle speed V is larger than "0", it is decided in step S21 that the vehicle is on running, and the process goes on to step S22. In step S22, a value being 20% (or which may be 0%) of the present target duty ratio DM, or a value being 20% (or which may be 0%) of the maximum value Dmax of the target duty ratio is set as a target duty ratio DM for allowing the drive motor M to generate a drive force being small enough to bring about a state in which no load is apparently applied to the drive motor M.

If it is decided in step S21 that the vehicle is on stoppage, the process goes on to step S186 of the above-described routine of "rapid acceleration suppressing control" shown in FIG. 4. As a result, the target duty ratio DM is rapidly reduced, and then gradually increased.

In this way, according to this embodiment, if a self-running operation is performed in a stoppage state of the vehicle with braking actuated, a self-running power to be generated by the drive motor is gradually increased to a value corresponding to an operated amount of self-running, it is possible to prevent "slip-down" of the vehicle upon start-up of the vehicle on a slope.

It is decided in step S17 that the vehicle is in the driver's non-riding state, the process goes on to step S24. In step S24, to allow the drive motor M to generate a self-running power optimum for hand-pushing drive of the vehicle, a value being 20% of the present target duty ratio DM, or a value being 20% of the maximum value Dmax of the target duty ratio is set as a new target duty ratio DM.

In this way, according to this embodiment, since a self-running power matched to a walking speed can be generated by using the self-running operation input means (throttle lever 16) for generating a usual self-running power, the motor-drive bicycle in this embodiment is allowed to achieve a self-running function matched to a walking speed without provision of a plurality of self-running operation input means.

Further, according to this embodiment, it is decided whether or not a self-running operation is performed in the driver's non-riding state, and a self-running power matched to a walking speed is generated only when it is decided that the self-running operation is performed in the driver's non-riding state, and accordingly, it is possible to eliminate an inconvenience that a self-running power matched to a walking speed is outputted in the driver's riding state.

Upon shift-up from the "second speed" to the "third speed", since an output torque at the "third speed" is larger than an output torque at the "second speed" at a gear-shift vehicle speed Vch23, the output torque is increased after gear-shift. If during running at the "second speed", a vehicle speed V reaches to the gear-shift vehicle speed Vch23 and thereby a timing of shift-down to the "third speed" comes, a gear-shift actuator is driven for gear-shift, and a drive current to be supplied to the drive motor is reduced to lower the output torque at the "third speed" to the output torque at the "second speed", whereby both the output torques at the "third speed" and the "second speed" are made to substantially correspond to each other. After that, the drive current to be supplied to the drive motor is gradually increased, to generate an output torque inherent to the "third speed".

## Claims

1. Method of controlling the shifting of adjacent gear steps (G) in a motor-driven bicycle including a drive motor (M) for generating a self-running power in response to an operation amount (Θth) of a self-running means (16) operated by a driver, a gear shifter (19) connected between said drive motor (M) and a drive wheel (31), and a gear shifter actuator (17) for switching adjacent two of gear steps of said gear shifter (19) at a predetermined gear shift vehicle speed (Vch),
**characterized in that**
both for upshifting and downshifting between said adjacent two of gear steps (G) said gear shift vehicle speed (Vch) is set to a speed at which vehicle speed-torque curves of said adjacent two of gear steps (G) intersect each other.

2. A method according to claim 1, wherein said gear shifter actuator (17) switches adjacent two of said gear steps (G) of said gear shifter (19) in response to a vehicle speed (V).

## Patentansprüche

1. Verfahren zum Steuern/Regeln des Schaltens benachbarter Gangstufen (G) in einem motorgetriebenen Fahrrad, das einen Antriebsmotor (M) zum Erzeugen einer Selbstfahrkraft in Antwort auf einen Betätigungsbetrag (θth) eines vom Fahrer betätigten Selbstfahrmittels (16), eine Gangschaltung (19), die zwischen dem Antriebsmotor (M) und einem Antriebsrad (31) angeschlossen ist, und einen Gangschaltaktuator (17) zum Schalten zweier benachbarter Gangstufen der Gangschaltung (19) bei einer vorbestimmten Gangschaltfahrzeuggeschwindigkeit (Vch) enthält,
**dadurch gekennzeichnet, dass**
sowohl für das Hochschalten als auch das Herunterschalten zwischen zwei benachbarten Gangstufen (G) die Gangschaltfahrzeuggeschwindigkeit (Vch) auf eine Geschwindigkeit gesetzt wird, bei der Fahrzeuggeschwindigkeits-Drehmomentkurven der zwei benachbarten Gangstufen (G) einander schneiden.

2. Verfahren nach Anspruch 1, worin der Gangschaltaktuator (17) zwei benachbarte der Gangstufen (G) der Gangschaltung (19) in Antwort auf eine Fahrzeuggeschwindigkeit (V) schaltet.

## Revendications

1. Procédé pour commander le changement entre deux rapports de vitesse adjacents (G) dans une bicyclette entraînée par moteur incluant un moteur d'entraînement (M) pour générer une puissance de déplacement automatique en réponse à une quantité d'actionnement (Θth) de moyens de déplacement automatique (16) actionnés par un conducteur, un dispositif de changement de vitesse (19) connecté entre ledit moteur d'entraînement (M) et une roue motrice (31), et un actionneur de dispositif de changement de vitesse (17) pour commuter deux rapports de vitesse adjacents dudit dispositif de changement de vitesse (19) à une vitesse de véhicule de changement de vitesse prédéterminée (Vch),
**caractérisé en ce que**
pour monter et descendre entre lesdits deux rapports de vitesse adjacents (G), ladite vitesse de véhicule de changement de vitesse (Vch) est établie à une vitesse à laquelle les courbes de vitesse-couple du véhicule desdits deux rapports de vitesse adjacents (G) se recoupent l'un l'autre.

2. Procédé selon la revendication 1, dans lequel ledit actionneur de dispositif de changement de vitesse (17) commute lesdits deux rapports de vitesse adjacents (G) dudit dispositif de changement de vitesse (19) en réponse à une vitesse de véhicule.
